# EUROPÄISCHE PATENTSCHRIFT

(11) **EP 1 722 935 B1**
(45) Veröffentlichungstag und Bekanntmachung des Hinweises auf die Patenterteilung: **16.07.2014**
(21) Anmeldenummer: 05714980.9
(22) Anmeldetag: 16.02.2005
(51) Int. Cl.: B25J 9/16, G01B 21/04

(54) **VERFAHREN ZUM EINMESSEN EINES ARBEITSPUNKTES VON WERKZEUGEN FÜR INDUSTRIEROBOTER**
METHOD FOR CALIBRATION OF A WORKING POINT FOR TOOLS ON INDUSTRIAL ROBOTS
PROCEDE DE CALIBRAGE D'UN POINT DE FONCTIONNEMENT D'OUTILS POUR ROBOTS INDUSTRIELS

(30) Priorität: 03.03.2004 DE 102004010312
(43) Veröffentlichungstag der Anmeldung: 22.11.2006
(73) Patentinhaber: LEONI Kabel Holding GmbH, 90402 Nürnberg (DE)
(72) Erfinder: Pagel, Thomas, 30900 Wendemark (DE); Kemp, Johannes, 38110 Braunschweig (DE)
(74) Vertreter: FDST Patentanwälte
(86) Internationale Anmeldenummer: PCT/DE2005/000262
(87) Internationale Veröffentlichungsnummer: WO 2005/084895

(56) Entgegenhaltungen:
- WO-A-2004/046734
- DE-A1- 10 230 772
- US-A- 5 177 563
- PATENT ABSTRACTS OF JAPAN Bd. 018, Nr. 502 (M-1676), 20. September 1994 (1994-09-20) -& JP 06 170768 A (MEIDENSHA CORP), 21. Juni 1994 (1994-06-21)
- PATENT ABSTRACTS OF JAPAN Bd. 1999, Nr. 14, 22. Dezember 1999 (1999-12-22) -& JP 11 254359 A (TOYOTA AUTOM LOOM WORKS LTD), 21. September 1999 (1999-09-21)

## Beschreibung

Die Erfindung betrifft ein Verfahren zum Einmessen eines Arbeitspunktes von Werkzeugen für Industrieroboter mit einer Einmessvorrichtung, die mindestens zwei jeweils mit einem Scheitelwinkel α größer Null winklig zueinander stehende und sich in einem Kreuzungspunkt kreuzende Lichtschranken hat und folgende Schritte aufweist:
a) Festlegen von SOLL-TCP-Lagekoordinaten eines SOLL-Arbeitspunktes des Werkzeugs bezogen auf einen Werkzeugbasispunkt eines
   Industrieroboters und eines auf den Arbeitspunkt bezogenen TCP-Koordinatensystems,

Ein derartiges Verfahren ist aus der DE 10 230 772 A1 zu entnehmen. Dabei wird das Werkzeug solange verfahren, bis das Werkzeug den Kreuzungspunkt der Lichtschranken erreicht. Die entsprechenden falsädlichen Koordicoten werden erfasst und für eine Korrelater heraufgezogen.

Industrieroboter haben zum Anfahren beliebiger Punkte innerhalb eines Arbeitsraums mehrere miteinander verbundene Arme, einen Handflansch am Ende des letzten Arms der miteinander verketteten Arme, und ein Werkzeug, das an den Handflansch angebracht ist. Das Werkzeug kann beispielsweise ein Greifer, ein Schweißkopf oder ähnliches sein.

Die Lage und Orientierung des Handflansches oder des Arbeitspunktes eines an den Handflansch angebrachten Werkzeugs kann in einem ortsfesten roboterunabhängigen Weltkoordinatensystem oder einem ortsfesten auf einen Verankerungspunkt des Industrieroboters bezogenen Basiskoordinatensystem erfolgen. Die Beschreibung der Lage der Freiheitsgrade, d. h. der Achsen und der Handorientierung erfolgt hingegen in Roboterkoordinaten, wobei ausgehend von der Grundachse des Roboters, d. h. des Basiskoordinatensystems, für jeden Arm ein Achsen-Roboterkoordinatensystem definiert ist, das die relative Lage jeder Achse bezogen auf ihre vorgehende Achse beschreibt. Der Zusammenhang der Achsen-Roboterkoordinatensysteme eines Industrieroboters wird durch definierte Koordinatentransformationen beschrieben. Durch Vorgabe der Lage und der Orientierung des Handflansch oder des Arbeitspunktes eines Werkzeugs im Weltkoordinatensystem können somit durch Koordinatentransformation die Achsen-Roboterkoordinaten berechnet werden, um die einzelnen Achsen des Industrieroboters ansteuern zu können.

Die Lage eines Arbeitspunktes eines Werkzeuges, das an den Handflansch des Industrieroboters angebracht wird, wird durch sogenannte TCP-Lagekoordinaten beschrieben. Die Programmierung des Industrieroboters erfolgt auf der Basis des Handflanschs und der festgelegten TCP-Lagekoordinaten. Die TCP-Lagekoordinaten werden bei jedem Werkzeug mitgeliefert und sind als Tool-Center-Point (TCP) bekannt. Die TCP-Lagekoordinaten sind ebenso wie die Achsen-Roboterkoordinaten jeweils ein Vektor mit sechs Dimensionen. Die ersten drei Koordinaten definieren die Lage des Arbeitspunktes relativ zu dem Werkzeugbasispunkt des Industrieroboters, d. h. des Befestigungspunktes des Werkzeugs an dem Handflansch. Die anderen drei Koordinaten definieren die Orientierung der Achsen des Arbeitspunktes relativ zu dem Werkzeugbasispunkt.

Der Arbeitspunkt des Werkzeugs kann beispielsweise die Spitze eines Schweißkopfes sein. Nur wenn die TCP-Lagekoordinaten exakt bekannt sind, kann der Arbeitspunkt des Werkzeugs präzise verfahren werden.

Im Betrieb kann sich der Arbeitspunkt des Werkzeugs jedoch durch Werkzeugverschleiß, Verbiegung etc. ändern, was zu einer fehlerhaften Positionierung des Arbeitspunktes des Werkzeugs führt.

Es besteht daher die Notwendigkeit den Arbeitspunkt von Werkzeugen hochgenau einzumessen.

In der EP 0 417 320 A1 ist ein Verfahren zum Einmessen des Arbeitspunktes (TCP) des Werkzeuges eines Industrieroboters beschrieben, bei dem ein Einstellpunkt an dem Handflansch des Roboterarms festgelegt ist, wobei die Position des Einstellpunktes relativ zu dem Handflansch bekannt ist. Weiterhin ist eine Referenzspitze im Arbeitsraum des Industrieroboters aufgestellt. Zum Einmessen des Arbeitspunktes wird die Spitze des Werkzeugs auf die Referenzspitze aufgesetzt und die Position und Orientierung der Werkzeugspitze in einem Basiskoordinatensystem bestimmt. Dann wird der Einstellpunkt des Handflansches auf die Referenzspitze aufgesetzt und die Position und Orientierung des Einstellpunktes in dem Koordinatensystem des Handflansches bestimmt. Zudem wird die Position und Orientierung der Referenzspitze in dem Bezugskoordinatensystem bestimmt und aus den drei Matrizen eine Transformationsmatrix zur Bezeichnung der TCP-Lagekoordinaten des Arbeitspunktes des Werkzeuges berechnet.

Das Einmessen erfordert einen mehrstufigen Verfahr-Vorgang sowie Koordinatentransformationen.

Aus dem US-Patent 6,352,354 B1 ist ein Lichtpunktelement zur Erzeugung eines Lichtpunktsignals an einem Arbeitspunkt eines Industrieroboter-Werkzeugs beschrieben. Hierdurch kann die genaue Position des Werkzeugs während einer Lernphase beschrieben werden.

In dem US-Patent 5,929,584 ist ein Verfahren zum Einmessen eines Arbeitspunktes von Werkzeugen mit einem Kalibrierblock beschrieben, der vertikale und horizontale Flächen hat. Durch Bewegung des Werkzeugs von einer Startposition bis zu einem Berührungspunkt des Werkzeugs an einer der Flächen und Zurückfahren des Werkzeugs zum Startpunkt und Wiederholen des Vorgangs für die andere Fläche werden die TCP-Lagekoordinaten des Arbeitspunktes berechnet. Hierzu ist nachteilig eine aufwändige Koordinatentransformation von dem Bezugskoordinatensystem über die einzelnen Roboterkoordinaten bis zu dem Handflansch erforderlich, um aus den Bezugskoordinaten die TCP-Lagekoordinaten im TCP-Koordinatensystem zu ermitteln.

In der DE 37 24 656 T2 ist eine mehrdimensionale Messmaschine mit Gabellichtschranke beschrieben, die sich an einem Kreuzungspunkt treffen. Auf Grund der mehreren Lichtschranken, die alle in der gleichen Ebene liegen, kann eine berührungslose Antastung des Werkstücks von unterschiedlichen Richtungen, aber in der selben Antastebene erfolgen.

Das US-Patent 5,177,563 offenbart eine Gabellichtschranke zur Kalibrierung eines Roboterarms, dass dieWerkzeugsspitze solange verfahren wird, die bis diese im dem Kreuzungspunkt der Lichtschranken liegt und beide Lichtschranken gleichzeitig ausgelöst sind. Die TCP-Lagekoordinaten in diesem Kreuzungspunkt werden mit SOLL-TCP-Koordinaten verglichen und hieraus eine Abweichung ermittelt. Die Suche des Kreuzungspunkts ist allerdings langwierig.

Aufgabe der Erfindung ist es daher, ein verbessertes Verfahren zum Einmessen eines Arbeitspunktes von Werkzeugen für Industrieroboter zu schaffen.

Die Aufgabe wird mit dem gattungsgemäßen Verfahren erfindungsgemäß gelöst durch die weiteren Schritte von:
b) Verfahren des Werkzeugs direkt zum SOLL -Arbeitspunkt mit Bezug auf das TCP-Koordinatensystem durch die Lichtschranken so, dass die dem Arbeitspunkt entsprechende Werkzeugspitze des Werkzeugs die Lichtschranken unterbricht.
c) Aufnehmen von IST-TCP-Lagekoordinaten bei der Unterbrechung einer jeweiligen Lichtschranke,
d) Bestimmen der Differenzen zwischen SOLL-TCP-Lagekoordinaten für die Unterbrechung der Lichtschranken bei einem SOLL-Arbeitspunkt und den entsprechenden aufgenommenen IST-TCP-Lagekoordinaten für den IST-Arbeitspunkt,
e) Berechnen der Abweichung des IST-Arbeitspunktes von dem SOLL-Arbeitspunkt für die durch die Lichtschranken vorgegebene Anzahl von Ebenen aus den Differenzen und der bekannten Lage und Scheitelwinkeln α der Lichtschranken.

Es wird somit vorgeschlagen, aus der bekannten durch die Lichtschranken aufgespannten Ebene und dem mindestens einen Scheitelwinkel α die Abweichung des IST-Arbeitspunktes von dem SOLL-Arbeitspunkt aus den IST-TCP-Lagekoordinaten für jede Achse des Koordinatensystems, die jeweils beim Unterbrechen einer Lichtschranke festgehalten werden, auf die Abweichung des Arbeitspunktes für einzelne Achsen des Koordinatensystems zu berechnen. Damit entfällt die Suche nach dem Kreuzungspunkt zur Bestimmung eines Arbeitspunktes. Vielmehr kann der Roboter in die Einmessvorrichtung so verfahren werden, als ob der SOLL-Arbeitspunkt von der Werkzeugspitze direkt erreicht werden soll. Aus den bei einer Arbeitspunktverschiebung auftretenden zeitlich versetzten Unterbrechungen der einzelnen Lichtschranken, deren Orientierung einen Zusammenhang mit dem Koordinatensystem des Industrieroboters aufweist, kann dann die Abweichungen des Arbeitspunktes bestimmt werden.

Es ist vorteilhaft, wenn anschließend die TCP-Lagekoordinaten um die berechnete Abweichung des IST-Arbeitspunktes von den SOLL-Arbeitspunkt für die Ebenen eines dem TCP-Lagekoordinaten zu Grunde liegenden Koordinatensystems korrigiert wird.

Besonders vorteilhaft ist es auch, wenn der SOLL-Arbeitspunkt mit den TCP-Lagekoordinaten festgelegt wird, bei denen die dem Arbeitspunkt entsprechende Werkzeugspitze alle Lichtschranken in einem gemeinsamen Kreuzungspunkt gleichzeitig unterbricht.

Deutlicher wird die Erfindung anhand einer vorteilhaften Ausführungsform, bei der zwei Lichtschranken vorgesehen sind, die sich mit einem Scheitelwinkel α von 90° kreuzen und eine erste Ebene eines Koordinatensystems aufspannen, wobei die erste Lichtschranke einer ersten Achse y und die zweite Lichtschranke einer zweiten Achse z des Koordinatensystems entspricht.

Aus der beim Unterbrechen der ersten Lichtschranke bestimmten Abweichung des IST-Arbeitspunktes vom SOLL-Arbeitspunkt kann auf Grund der definierten Zuordnung der Lichtschranken zu der ersten und zweiten Achse die Abweichung des Arbeitspunktes für die erste Achse und aus der beim Unterbrechen der zweiten Lichtschranke bestimmten Abweichung des IST-Arbeitspunktes vom SOLL-Arbeitspunkt die Abweichung des Arbeitspunktes für die zweite Achse bestimmt werden.

Sofern die TCP-Lagekoordinaten, die beim Unterbrechen der Lichtschranken bestimmt werden, im selben Koordinatensystem beschrieben sind, würde je nach Werkzeugverbiegung beispielsweise beim Unterbrechen der ersten Lichtschranke die Abweichung der y-Koordinate der TCP-Lagekoordinaten und beim Unterbrechen der zweiten Lichtschranke die Abweichung der z-Koordinate der TCP-Lagekoordinaten bestimmt und gegebenfalls die TCP-Lagekoordinaten entsprechend korrigiert werden.

Die Erfindung wird nachfolgend anhand der beigefügten Zeichnungen näher erläutert. Es zeigen:
- Figur 1 -: perspektivische Ansicht einer erfindungsgemäßen Einmessvorrichtung mit zwei sich kreuzenden Lichtschranken;
- Figur 2 -: Draufsicht auf die Einmessvorrichtung nach Figur 1;
- Figur 3 -: Skizze eines Industrieroboters mit mehreren Armen und Basiskoordinatensystem sowie Achsenkoordinatensystemen;
- Figur 4 -: Skizze der Verlagerung des Arbeitspunktes eines Werkzeugs nach Verschleiß in Bezug auf ein TCP-Koordinatensystem.

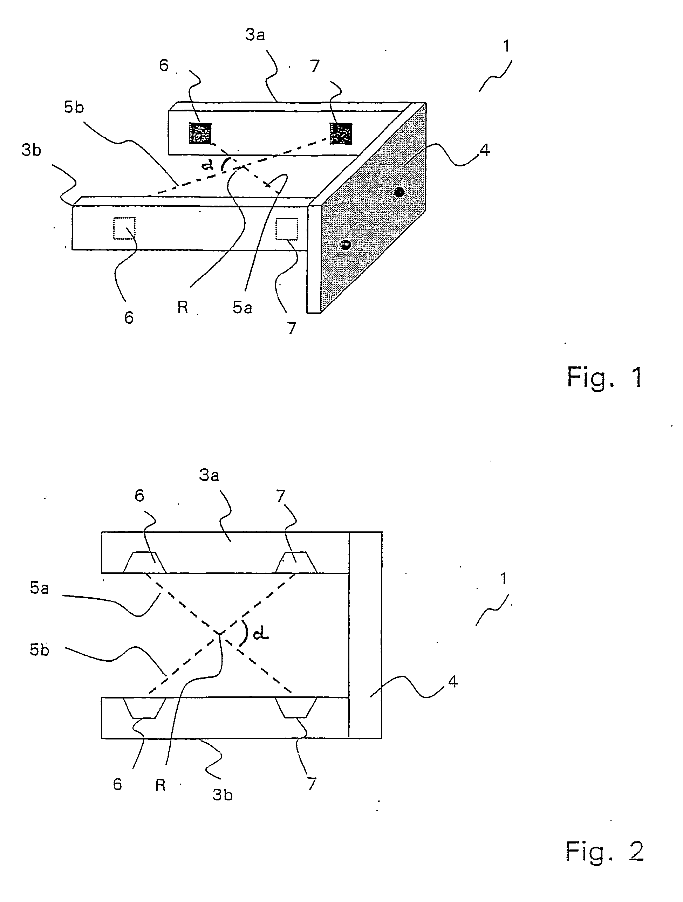

Die Figur 1 lässt eine erfindungsgemäße Einmessvorrichtung 1 in perspektivischer Ansicht erkennen. Die Einmessvorrichtung 1 hat einen auf einer Seite offenen Rahmen 2 mit zwei voneinander beabstandeten parallelen Schenkeln 3a, 3b. Die Einmessvorrichtung 1 ist somit U-förmig. Die Schenkel 3a, 3b sind integral mit einer Halteplatte 4 verbunden, mit der die Einmessvorrichtung 1 ortsfest in dem Arbeitsraum des Industrieroboters montiert werden kann.

In den Schenkeln 3a, 3b sind diagonal hierzu ausgerichtete Lichtschranken 5a, 5b vorgesehen, die mit einem Scheitelwinkel α von 90° zueinander verlaufen und sich in einem Kreuzungspunkt R im Zwischenraum zwischen den Schenkeln 3a, 3b treffen. Hierzu ist jeweils ein Sender 6 und ein Empfänger 7 pro Lichtschranke 5a, 5b an einem vorderen Ende eines ersten Schenkels 3a und am hinteren Endes des anderen Schenkels 3b für die erste Lichtschranke 5a bzw. an dem hinteren Ende des ersten Schenkels 3a und dem vorderen Ende des zweiten Schenkels 3b für die zweite Lichtschranke 5b angebracht. Auf diese Weise wird eine Gabellichtschranke geschaffen, die vorzugsweise als Infrarot-Lichtschranke ausgebildet ist.

Die Figur 2 lässt die Einmessvorrichtung 1 in der Draufsicht erkennen. Es wird deutlich, dass die Lichtschranken 5a, 5b diagonal zwischen den Schenkeln 3a und 3b verlaufen und sich im Zwischenraum der Schenkel 3a, 3b in dem Kreuzungspunkt R treffen.

Ein Arbeitspunkt TCP eines Werkzeugs für einen Industrieroboter, beispielsweise die Werkzeugspitze, wird zum Einmessen des Arbeitspunktes TCP so verfahren, dass ein SOLL-Arbeitspunkt TCP_{SOLL} angefahren wird, der vorzugsweise dem Kreuzungspunkt R der Einmessvorrichtung 1 liegt. In diesem Falle sind beide Lichtschranken 5a, 5b durch die Werkzeugspitze unterbrochen, so dass ein Schaltsignal erzeugt wird.

Das Einmessverfahren wird im Folgenden näher erläutert.

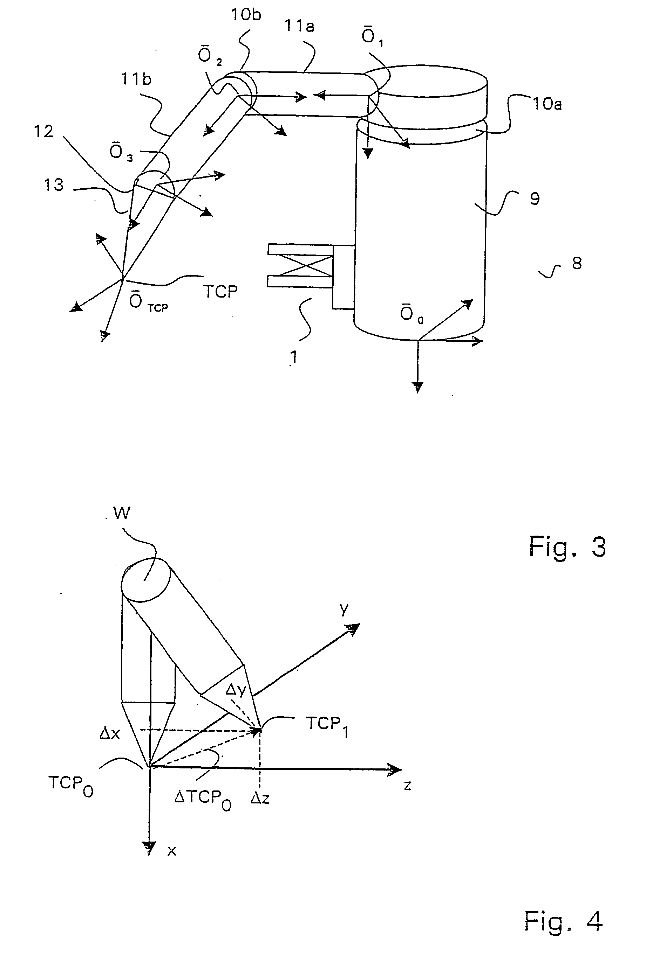

Die Figur 3 lässt eine Skizze eines Industrieroboters 8 erkennen. Ei n Industrieroboter 8 hat ein Basiskoordinatensystem O̅₀ oder Weltkoordinatensystem, das ortsfest in Bezug auf das Fundament des Industrieroboters 8 ausgerichtet ist. An dem Sockel 9 befindet sich eine Kette von über Gelenke 10 miteinander verbundene Arme 11. Für jeden dieser Arme 11 ist ein Achsen-Koordinatensystem O̅₁, O̅₂ O̅₃ definiert, mit dem Position und Orientierung des jeweiligen Endes des entsprechenden Arms 11 in Bezug auf das zugeordnete Gelenk 10, mit der Arm 11 mit dem vorhergehenden Arm 11 verbunden ist, beschreibt.

An dem Ende der Kette von Armen 11 befindet sich eine Handfläche 12, an die das Werkzeug 13 angebracht ist.

Für das Werkzeug 13 ist ein TCP-Koordinatensystem O̅*_{TCP}*festgelegt, das einen Ursprung in dem Arbeitspunkt TCP des Werkzeugs hat. Für das Werkzeug 13 werden auf der Basis dieses TCP-Koordinatensystems O_{TCP} TCP-Lagekoordinaten bereitgestellt, die die Position und Orientierung des Arbeitspunktes TCP in Bezug auf den Werkzeugbasispunkt W am Handflansch 12, d. h. in Bezug auf den Befestigungspunkt des Werkzeugs 13 an dem Industrieroboter 8 definiert.

Um die TCP-Lagekoordinaten im Betrieb bezogen auf den Werkzeugbasispunkt W des Industrieroboters 8 schnell und mit geringen Rechenaufwand einmessen zu können, wird die Werkzeugspitze des Werkzeugs 13 in den SOLL-Arbeitspunkt TCP_{SOLL} der ortsfest montierten Einmessvorrichtung 1 auf der Basis des TCP-Koordinatensystems O̅*_{TCP}* verfahren. Es erfolgt somit eine auf den Arbeitspunkt TCP bezogene Interpolation des Verfahrweges beim Führen des Werkzeugs 13 durch den Industrieroboter 8. Der Ursprung des TCP-Koordinatensystems O̅*_{TCP}* wird hierbei stationär in Bezug auf die festgelegten TCP-Lagekoordinaten des Arbeitspunktes TCP gehalten.

Beim Unterbrechen der ersten Lichtschranke werden die TCP-Lagekoordinaten festgehalten und die Abweichung des IST-Arbeitspunktes TCP_{IST} vom SOLL-Arbeitspunkt TCP_{SOLL} für die Achse y bestimmt. Entsprechend wird beim Unterbrechen der zweiten Lichtschranke die Abweichung des IST-Arbeitspunktes TCP_{IST} vom SOLL-Arbeitspunkt TCP_{SOLL} für die zweite Achse z bestimmt. Diese Abweichungen für die erste Achse y und die zweite Achse z entsprechen unter Berücksichtigung, dass die beiden Lichtschranken eine gemeinsame Ebene aufspannen, die für die dritte Achse x im Nullpunkt durchfahren wurde, der Verschiebung des Arbeitspunktes TCP im dreidimensiionalen Raum. Die Reihenfolge der Unterbrechung ergibt sich durch die Werkzeugbiegung bzw. die Durchfahrtsteuerung.

Der tatsächliche Werkzeugmittelpunkt wird durch den Mittelpunkt zwischen Unterbrechung und erneuter Freigabe einer Lichtschranke bestimmt. Aus der Dauer der Unterbrechung kann zudem der Durchmesser des Werkzeugs bestimmt werden.

Aus der Abweichung kann somit ohne aufwendige Suche des Kreuzungspunktes R direkt die Verschiebung des Arbeitspunktes TCP bei Verschleiß oder Verbiegen des Werkzeugs 13 in den TCP-Koordinaten bestimmt werden. Es entfällt auch die Notwendigkeit, aufwändige Koordinatentransformationen durchzuführen.

Die Figur 4 lässt das Werkzeug 13 mit dem TCP-Koordinatensystem O̅*_{TCP}* erkennen, dass seinen Ursprung im Arbeitspunkt TCP des Werkzeugs 13 hat. Für den Fall der skizzierten Verkrümmung des Werkzeuges verlagert sich der Arbeitspunkt TCP₁ in Bezug auf den vorher festgelegten ursprünglichen Arbeitspunkt TCP₀. Die TCP-Lagekoordinaten sind um diese Verschiebung ΔTCP₀=TCP₁-TCP₀ zu korrigieren. Da erfindungsgemäß die Steuerung des Industrie-Roboters 8 in Bezug auf das TCP-Koordinatensystem O̅*_{TCP}* erfolgt, wird die Differenz zwischen den ursprünglich festgelegten TCP-Lagekoordinaten TCP₀ und die Lage des neuen Arbeitspunktes TCP₁ eines verschlissenen Werkzeugs 13 aus den Differenzen Δy beim Unterbrechen der ersten Lichtschranke für die y-Achse und Δz beim Unterbrechen der zweiten Lichtschranke für die z-Achse bestimmt. Da die durch die Lichtschranken aufgespannten Ebene bei x gleich Null liegt, kann zu dem die Abweichung Δx zum x-Wert des SOLL-Arbeitspunktes berechnet werden.

Abweichungen der Werkzeuglänge in x-Richtung können beispielsweise durch eine zweite Messfahrt bestimmt werden, indem das Werkzeug in x-Achsrichtung von oben bzw. unten in die sich kreuzenden Lichtschranken gefahren wird.

Sofern die Lichtschranken nicht mit den x-, y- und z-Achsen übereinstimmen, können aus der bekannten Orientierung der Lichtschranken und dem Scheitelwinkel α durch Koordinatentransformation die Abweichungen in x-, y-und z-Achsenrichtung berechnet werden.

## Patentansprüche

1. Verfahren zum Einmessen eines Arbeitspunktes (TCP) von Werkzeugen (13) für Industrieroboter (8) mit einer Einmessvorrichtung (1), die mindestens zwei jeweils mit einem Scheitelwinkel (α) größer Null winklig zueinander stehende und sich in einem Kreuzungspunkt (R) kreuzende Lichtschranken hat, mit den Schritten:
a) Festlegen von SOLL-TCP-Lagekoordinaten eines SOLL-Arbeitspunktes (TCP_{SOLL}) des Werkzeugs (13) bezogen auf einen Werkzeugbasispunkt (W) des Industrieroboters (8) und eines auf den Arbeitspunkt (TCP) bezogenen TCP-Koordinatensystems,
**gekennzeichnet durch**
b) Verfahren des Werkzeugs (13) direkt zum SOLL-Arbeitspunkt mit Bezug auf das TCP-Koordinatensystem **durch** die Lichtschranken so, dass die dem Arbeitspunkt (TCP) entsprechende Werkzeugspitze des Werkzeugs (13) die Lichtschranken unterbricht,
c) Aufnehmen von IST-TCP-Lagekoordinaten bei der Unterbrechung einer jeweiligen Lichtschranke,
d) Bestimmen der Differenzen zwischen den SOLL-TCP-Lagekoordinaten für die Unterbrechung der Lichtschranken bei einem Soll-Arbeitspunkt (TCP_{SOLL}) und den entsprechenden aufgenommenen IST-TCP-Lagekoordinaten für den IST-Arbeitspunkt (TCP_{IST}),
e) Berechnen der Abweichung des IST-Arbeitspunktes (TCP_{IST}) von dem Soll-Arbeitspunkt (TCP_{SOLL}) für die **durch** die Lichtschranken vorgegebene Anzahl von Ebenen aus den Differenzen und der bekannten Lage und Scheitelwinkeln (α) der Lichtschranken.

2. Verfahren nach Anspruch 1, **gekennzeichnet durch** Korrigieren der TCP-Lagekoordinaten um die berechnete Abweichung zwischen den festgelegten IST-TCP-Lagekoordinaten um die berechnete Abweichung des IST-Arbeitspunktes (TCP_{IST}) und von dem SOLL-Arbeitspunkt (TCP_{SOLL}) für die Ebenen eines den TCP-Lagekoordinaten zu Grunde liegenden Koordinatensystems.

3. Verfahren nach einem der vorherigen Ansprüche, **dadurch gekennzeichnet, dass** der Soll-Arbeitspunkt (TCP_{SOLL}) mit den TCP-Lagekoordinaten festgelegt wird, bei denen die dem Arbeitspunkt (TCP) entsprechende Werkzeugspitze alle Lichtschranken in einem gemeinsamen Kreuzungspunkt (R) gleichzeitig unterbricht.

4. Verfahren nach einem der vorherigen Ansprüche, wobei zwei Lichtschranken vorgesehen sind, die sich mit einem Scheitelwinkel α von 90° kreuzen und eine erste Ebene eines Koordinatensystems aufspannen, und wobei die erste Lichtschranke einer ersten Achse (y) und die zweite Lichtschranke einer zweiten Achse (z) des Koordinatensystems entspricht, **dadurch gekennzeichnet, dass** aus der beim Unterbrechen der ersten Lichtschranke bestimmten Abweichung des IST-Arbeitspunktes (TCP_{IST}) vom SOLL-Arbeitspunkt (TCP_{SOLL}) die Abweichung des Arbeitspunktes (TCP) für die erste Achse (y) und aus der beim Unterbrechen der zweiten Lichtschranke bestimmten Abweichung des IST-Arbeitspunktes (TCP_{IST}) vom SOLL-Arbeitspunkt (TCP_{SOLL}) die Abweichung des Arbeitspunktes (TCP) für die zweite Achse (z) bestimmt wird.

5. Verfahren nach einem der vorhergehenden Ansprüche, **gekennzeichnet durch** Bestimmen der IST-TCP-Lagekoordinaten als mittlere IST-TCP-Lagekoordinate zwischen dem Zeitpunkt der Unterbrechung einer Lichtschranke und der folgenden Freigabe der Lichtschranke.

6. Verfahren nach Anspruch 5, **gekennzeichnet durch** Bestimmung des Werkzeugdurchmessers aus der Differenz der zum Zeitpunkt der Unterbrechung einer Lichtschranke und der folgenden Freigabe der Lichtschranke bestimmten IST-TCP-Lagekoordinaten.

## Claims

1. Method for calibrating a tool center point (TCP) of tools (13) for industrial robots (8) comprising a calibration apparatus (1) that has at least two light barriers which are angled to one another with a vertex angle (α) greater than zero in each case and cross one another at a crossing point (R), exhibiting the steps of:
a) fixing DESIRED TCP positional coordinates of a DESIRED tool center point (TCP_{DESIRED}) of the tool (13) with reference to a tool reference point (W) of an industrial robot (8), and to a TCP coordinate system referred to the tool center point (TCP),
**characterized by**
b) moving the tool (13) directly to the DESIRED tool center point with reference to the TCP coordinate system through the light barriers such that the tip of the tool (13) corresponding to the tool center point (TCP) interrupts the light barriers,
c) recording ACTUAL TCP positional coordinates upon the interruption of a respective light barrier,
d) determining the differences between the DESIRED TCP positional coordinates for the interruption of the light barriers at a DESIRED tool center point (TCP_{DESIRED}) and the corresponding recorded ACTUAL TCP positional coordinates for the ACTUAL tool center point (TCP_{ACTUAL}),
e) calculating the deviation of the ACTUAL tool center point (TCP_{ACTUAL}) from the DESIRED tool center point (TCP_{DESIRED}) for the number of planes that is prescribed by the light barriers from the differences and the known position and vertex angles (α) for the light barriers.

2. Method according to Claim 1, **characterized by** correcting the TCP positional coordinates by the calculated deviation between the fixed ACTUAL TCP position coordinates by the calculated deviation of the ACTUAL tool center point (TCP_{ACTUAL}) and from the DESIRED tool center point (TCP_{DESIRED}) for the planes of a coordinate system, on which the TCP positional coordinates are based.

3. Method according to one of the preceding claims, **characterized in that** the DESIRED tool center point (TCP_{DESIRED}) is fixed with the aid of the TCP positional coordinates in the case of which the tool tip corresponding to the tool center point (TCP) simultaneously interrupts all the light barriers at a common crossing point (R).

4. Method according to one of the preceding claims, two light barriers being provided that cross one another at a vertex angle α of 90° and define a first plane of a coordinate system, and with the first light barrier corresponding to a first axis (y), and the second light barrier corresponding to a second axis (z) of the coordinate system, **characterized in that** the deviation of the tool center point (TCP) for the first axis (y) is determined from the deviation, determined upon interruption of the first light barrier, of the ACTUAL tool center point (TCP_{ACTUAL}) from the DESIRED tool center point (TCP_{DESIRED}), and the deviation of the tool center point (TCP) for the second axis (z) is determined from the deviation, determined upon interruption of the second light barrier, of the ACTUAL tool center point (TCP_{ACTUAL}) from the DESIRED tool center point (TCP_{DESIRED}).

5. Method according to one of the preceding claims, **characterized by** determining the ACTUAL TCP position coordinates as mean ACTUAL TCP positional coordinates between the instant of the interruption of a light barrier and the subsequent release of the light barrier.

6. Method according to Claim 5, **characterized by** determining the tool diameter from the difference of the ACTUAL TCP positional coordinates determined at the instant of the interruption of a light barrier and the subsequent release of the light barrier.

## Revendications

1. Procédé de mesure d'un point de travail (TCP) d'outils (13) de robots industriels (8) à l'aide d'un dispositif de mesure (1) qui possède au moins deux barrières lumineuses à chaque fois formant l'une par rapport à l'autre un angle de sommet (α) supérieur à zéro et se croisant en un point de croisement (R), le procédé présentant l'étape qui consiste à :
a) définir des coordonnées de position de consigne TCP d'un point de travail de consigne (TCPₛₒₗₗ) de l'outil (13) par rapport à un point de base d'outil (W) du robot industriel (8) et d'un système de coordonnées TCP rapporté au point de travail (TCP),
**caractérisé par** les étapes qui consistent à
b) déplacer directement l'outil (13) vers le point de travail de consigne en se référant au système de coordonnées TCP à travers les barrières lumineuses de telle sorte que la pointe de l'outil (13) qui correspond au point de travail (TCP) interrompe les barrières lumineuses,
c) enregistrer les coordonnées de position effective TCP lors de l'interruption de chaque barrière lumineuse,
d) déterminer les différences entre les coordonnées de position de consigne TCP pour l'interruption des barrières lumineuses à un point de travail de consigne (TCPₛₒₗₗ) et les coordonnées de position effective TCP enregistrées correspondantes pour le point effectif de travail (TCPᵢₛₜ) et
e) à partir des différences, de la position connue et des angles de sommet (α) des barrières lumineuses, calculer l'écart entre le point effectif de travail (TCPᵢₛₜ) et le point de travail de consigne (TCPₛₒₗₗ) pour le nombre de plans prédéterminé par les barrières lumineuses.

2. Procédé selon la revendication 1, **caractérisé par** la correction des coordonnées de position TCP de l'écart calculé entre les coordonnées de position effective TCP définies de l'écart calculé du point effectif de travail (TCPᵢₛₜ) et depuis le point de travail de consigne (TCPₛₒₗₗ) pour les plans d'un système de coordonnées à la base des coordonnées de position TCP.

3. Procédé selon l'une des revendications précédentes, **caractérisé en ce que** le point de travail de consigne (TCPₛₒₗₗ) est défini par les coordonnées de position TCP pour lesquelles la pointe d'outil qui correspond au point de travail (TCP) interrompt toutes les barrières lumineuses simultanément en un point de croisement commun (R).

4. Procédé selon l'une des revendications précédentes, dans lequel deux barrières lumineuses qui se croisent à un angle de sommet α de 90° et définissent un premier plan d'un système de coordonnées sont prévues, la première barrière lumineuse correspondant à un premier axe (y) et la deuxième barrière lumineuse à un deuxième axe (z) du système de coordonnées, **caractérisé en ce que** l'écart du point de travail (TCP) suivant le premier axe (y) est déterminé à partir de l'écart entre le point effectif de travail (TCPᵢₛₜ) et le point de travail de consigne (TCPₛₒₗₗ) déterminé lors de l'interruption de la première barrière lumineuse et **en ce que** l'écart du point de travail (TCP) suivant le deuxième axe (z) est déterminé à partir de l'écart entre le point effectif de travail (TCPᵢₛₜ) et le point de travail de consigne (TCPₛₒₗₗ) déterminé lors de l'interruption de la deuxième barrière lumineuse.

5. Procédé selon l'une des revendications précédentes, **caractérisé par** la détermination des coordonnées de position effective TCP comme coordonnées de position effective TCP moyennes entre l'instant de l'interruption d'une barrière lumineuse et la libération ultérieure de la barrière lumineuse.

6. Procédé selon la revendication 5, **caractérisé par** la détermination du diamètre de l'outil à partir de la différence entre les coordonnées de position effective TCP déterminées à l'instant de l'interruption d'une barrière lumineuse et à l'instant de la libération ultérieure de la barrière lumineuse.
